# FASCICULE DE BREVET EUROPEEN

(11) **EP 3 221 208 B1**
(45) Date de publication et mention de la délivrance du brevet: **05.09.2018**
(21) Numéro de dépôt: 15784089.3
(22) Date de dépôt: 05.10.2015
(51) Int. Cl.: B62D 25/20, B60R 21/01, G01P 15/00

(54) **FIXATION SUR UN VÉHICULE AUTOMOBILE D'UN DISPOSITIF DE DÉTECTION DE CHOC POUR COUSSIN GONFLABLE**
ANBAUGERÄT FÜR EIN KRAFTFAHRZEUG FÜR AIRBAGAUFPRALLDETEKTIONSVORRICHTUNG
ATTACHMENT TO A MOTOR VEHICLE OF AN AIRBAG IMPACT DETECTION DEVICE

(30) Priorité: 20.11.2014 FR 1461269
(43) Date de publication de la demande: 27.09.2017
(73) Titulaire: PSA Automobiles SA, 78300 Poissy (FR)
(72) Inventeur: SAREH, Benchabane, 75012 Paris (FR); CORNEFERT, Arnaud, 94260 Fresnes (FR); PRIAN, Patrick, 77200 Torcy (FR); CORDELETTE, Matthieu, 90140 Bourogne (FR)
(74) Mandataire: Fosse, Danièle
(86) Numéro de dépôt international: PCT/FR2015/052666
(87) Numéro de publication internationale: WO 2016/079391

(56) Documents cités:
- EP-A2- 0 810 147
- FR-A1- 2 874 890
- FR-A1- 2 888 804

## Description

L'invention a trait au domaine des véhicules automobiles, plus particulièrement à la problématique de la détection de choc sur un véhicule automobile en vue du déclenchement des dispositifs de sécurité tels qu'un ou plusieurs coussins gonflables.

Un véhicule automobile moderne comprend généralement un dispositif de détection de choc. Un tel dispositif peut commander ou bien être associé à un dispositif de déclenchement de coussins gonflables ; il peut également commander un ou des dispositifs de mise en tension de ceintures de sécurité. Un tel dispositif de détection de choc est généralement monté sur la structure du véhicule automobile ; Il est connu de fixer un tel dispositif par exemple sur la structure du plancher du véhicule. Les moyens de fixation d'un tel dispositif doivent satisfaire des critères de raideur de sorte à ce que le dispositif ne génère des commandes que pour des chocs d'intensité supérieure à celle, par exemple, générée par le passage du véhicule sur une irrégularité de la route ou bien lors de la collision d'une portière s'ouvrant contre un obstacle. Les moyens de fixation d'un tel dispositif de détection de choc doivent satisfaire en particulier à un critère d'« inertance ». L'inertance des moyens de fixation du dispositif indique leur comportement vibratoire suite à une sollicitation. Lors de tests d'inertance, les moyens de fixation d'un dispositif de détection de choc, par exemple des vis de fixation, sont sollicités par le déplacement d'une gâchette générant un choc contre le moyen de fixation.

Le document de brevet KR 20140020656 A divulgue un plancher de véhicule sur lequel est monté un dispositif de détection de choc comme présenté ci-avant. La structure du plancher comprend un tunnel central s'étendant longitudinalement et destiné à recevoir sous sa face inférieure un tuyau d'échappement. Le dispositif de détection est monté sur le tunnel central. Le plancher comprend également des traverses à l'avant du plancher reliant le tunnel central aux parois latérales de la carrosserie du véhicule, le dispositif de détection de choc étant situé longitudinalement au niveau des traverses. L'enseignement est intéressant en ce que les traverses permettent de filtrer en deçà d'un certain seuil la transmission des ondes vibratoires vers le dispositif de détection de chocs. La solution de cet enseignement se limite cependant aux structures de véhicule pour lesquelles est adaptée la fixation d'un dispositif de détection de choc sur le tunnel central au niveau des traverses avant du plancher. Cette zone avant du tunnel central est cependant habituellement réservée à d'autres composants, comme par exemple un levier de boîte de vitesse.

Le document EP 0 810 147 A2 divulgue une plaque plurifonctionnelle pour plancher de véhicule, présentant notamment une platine pour frein à main, une fixation pour boîtier de connexion et un espace de réception pour un capteur d'airbag, où les moyens de fixation accueillent un canal de câble.

L'invention a pour objectif de proposer une solution palliant au moins un inconvénient de l'état de la technique, en particulier de l'état de la technique mentionné ci-dessus. Plus particulièrement, l'invention a pour objectif de proposer une solution de fixation adéquate d'un dispositif de détection de choc du véhicule. L'invention a pour objet une structure de véhicule automobile comprenant une portion généralement étendue avec plusieurs vis soudées à ladite portion et destinées à la fixation d'un dispositif de détection de choc et de déclenchement de coussin(s) gonflable(s) ; remarquable en ce qu'elle comprend, en outre : une plaque nervurée fixée sur la portion de structure entre les vis de manière à diminuer l'inertance d'au moins une desdites vis.

L'inertance est une caractéristique acoustique permettant de définir certains phénomènes vibratoires concernant les structures. Elle indique la façon dont une structure réagit en vibrations à la sollicitation d'un effort. Formellement, c'est le rapport de l'accélération que prend la masse sur la force excitatrice en un point donné d'une structure, dans le domaine fréquentiel ; elle s'exprime en m.s⁻².N⁻¹. Selon un mode avantageux de l'invention, la structure comprend un plancher formant un tunnel central longitudinal, la portion généralement étendue étant située sur la partie supérieure dudit tunnel, les vis de fixation s'étendant en saillie vers le haut.

Selon un mode avantageux, la structure comprend une traverse « médiane » du plancher, la portion de structure est située à distance longitudinalement de ladite traverse médiane, préférentiellement à plus de 20cm, plus préférentiellement à plus de 30cm, plus préférentiellement encore à plus de 40cm. La traverse « médiane » du plancher s'entend comme étant située à une distance des extrémités avant et arrière du plancher de plus de 40% de la distance entre lesdites extrémités.

Selon un mode avantageux de l'invention, la plaque nervurée est un embouti comprenant une ou plusieurs nervures, ladite plaque étant fixée à la portion de structure par soudage.

Selon un mode avantageux de l'invention, la plaque nervurée est fixée à la portion de structure par des points de soudure électrique par résistance.

Selon un mode avantageux de l'invention, une des vis est disposée latéralement à distance du centre de la portion de structure, la plaque nervurée comprenant une nervure s'étendant entre ladite vis et un bord de ladite portion le plus proche latéralement de ladite vis.

Selon un mode avantageux de l'invention, la nervure s'étend sur une longueur de plus 50mm, préférentiellement plus de 100mm, plus préférentiellement encore plus de 150mm.

Selon un mode avantageux de l'invention, la nervure est d'une section comprise entre 5mm et 25mm, préférentiellement entre 10mm et 20mm.

Selon un mode avantageux de l'invention, la nervure comprend une première branche s'étendant longitudinalement et une deuxième branche s'étendant perpendiculairement à ladite première branche et joignant ladite branche par une portion de forme coudée.

Selon un mode avantageux de l'invention, la première branche s'étend entre la vis et le bord de la portion de structure le plus proche latéralement de ladite vis.

Selon un mode avantageux de l'invention, la portion coudée de la nervure est située au niveau d'un bord arrière de la plaque nervurée.

Selon un mode avantageux de l'invention, la portion coudée est inclinée d'un angle compris entre 10° et 70° par rapport à la première branche, préférentiellement d'un angle compris entre 40 et 50°.

Selon un mode avantageux de l'invention, la différence de longueur entre la première branche et la portion coudée est inférieure à 50% de la longueur de la première branche, préférentiellement inférieure à 20%.

Selon un mode avantageux de l'invention, la plaque nervurée comprend un ou plusieurs orifices traversés par la ou les vis de fixation, respectivement.

Selon un mode avantageux de l'invention, la nervure s'étend entre l'orifice recevant la vis disposée latéralement à distance du centre de la portion de structure et le bord de la plaque le plus proche latéralement dudit orifice.

Selon un mode avantageux de l'invention, la structure comprend un dispositif de détection de choc, ledit dispositif étant fixé à la portion de structure via trois des vis de fixation.

Selon un mode avantageux de l'invention, la ou les vis de fixation de la portion de structure satisfont au critère d'inertance correspondant à ce que l'inertance de la ou des vis est: inférieure à un premier palier à 0,1m.s⁻².N⁻¹ pour une plage de fréquences de vibration comprise entre 0Hz et 75Hz ; et inférieure à un deuxième palier à 1m.s⁻².N⁻¹ pour une plage de fréquences de vibration comprise entre 150Hz et 600Hz.

Selon un mode avantageux de l'invention, la ou les vis comprennent, chacune, un épaulement à distance de la portion de structure, apte à recevoir le contour d'un orifice du dispositif de détection de choc en vue de sa fixation à distance de ladite portion. La distance en question peut être comprise entre 5mm et 30mm.

L'invention a également pour objet un véhicule automobile remarquable en ce qu'il comprend une structure conforme à l'invention.

L'invention a également pour objet une plaque nervurée de forme généralement rectangulaire avec quatre coins et destinée à être montée à la structure d'un véhicule automobile en vue de la fixation d'un dispositif de détection de choc et de déclenchement de coussin(s) gonflable(s), remarquable en ce qu'elle comprend : au moins une nervure décrivant une forme de L avec une portion coudée située à un des coins de la plaque nervurée ; trois orifices de fixation, chacun étant situé à un autre des coins de la plaque nervurée.

Selon un mode avantageux de l'invention, les première et deuxième branches de la nervure en forme de L s'étendent sur la plaque en longeant un bord latéral et un bord arrière de la plaque nervurée, respectivement. Les bords latéral et arrière s'entendent lorsque la plaque nervurée est fixée à la structure.

Selon un mode avantageux de l'invention, la nervure en forme de L est une nervure principale, la plaque comprenant, en outre, une ou plusieurs autres nervures secondaires.

Selon un mode avantageux de l'invention, la ou au moins une des nervures secondaires s'étend dans une direction moyenne parallèle à la première branche de la nervure principale en forme de L.

Selon un mode avantageux de l'invention, la plaque nervurée comprend une face de fixation sur le véhicule, ladite face de fixation formant la face concave de la nervure en forme de L.

Selon un mode avantageux de l'invention, la surface de la plaque nervurée est comprise entre 60cm² et 100cm², préférentiellement entre 70cm² et 90cm².

Les mesures de l'invention sont intéressantes en ce que les vis de la portion de structure destinées à la fixation d'un dispositif de détection de choc du véhicule satisfont aux critères d'inertance requis pour la fixation d'un dispositif de détection de choc du véhicule. En effet, la portion de structure est renforcée par la plaque nervurée qui elle-même est configurée de sorte à ce que la portion de structure est capable de filtrer de manière adaptée les vibrations liées aux divers types de choc du véhicule.

D'autres caractéristiques et avantages de la présente invention seront mieux compris à l'aide de la description et des dessins parmi lesquels :
- La figure 1 est une vue de dessus d'une structure conforme à l'invention d'un véhicule automobile comprenant une portion avec une plaque nervurée conforme à l'invention ;
- La figure 2 est une vue de côté de la portion de la structure de la figure 1, un dispositif de détection de chocs du véhicule étant fixé à ladite portion ;
- La figure 3 est une vue de dessus de la plaque nervurée conforme à l'invention ;
- La figure 4 est une vue d'un diagramme d'inertance en fonction de la fréquence avec une courbe limite d'inertance à laquelle doit satisfaire les vis de fixation de la portion de structure des figures 1 et 2 ;

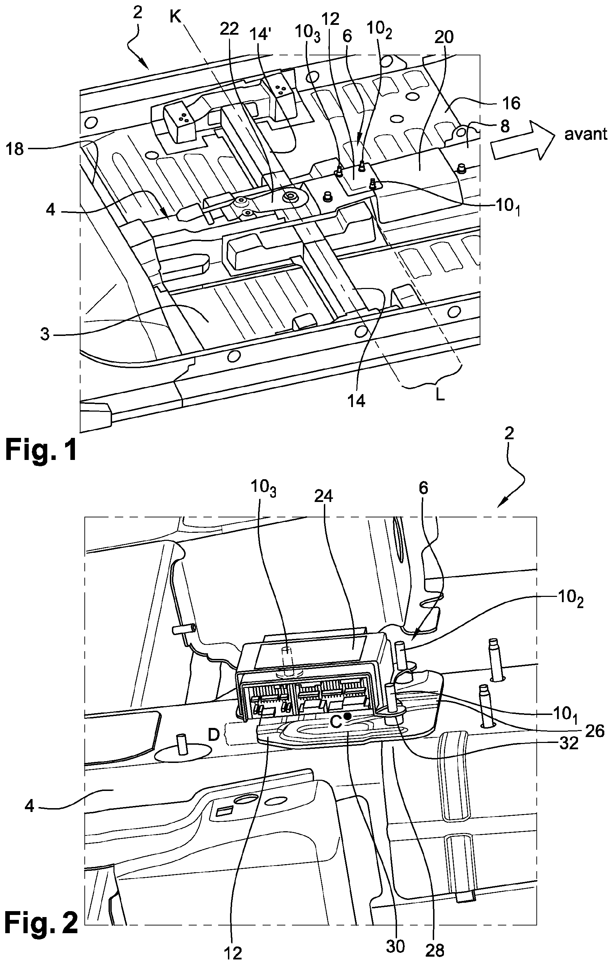

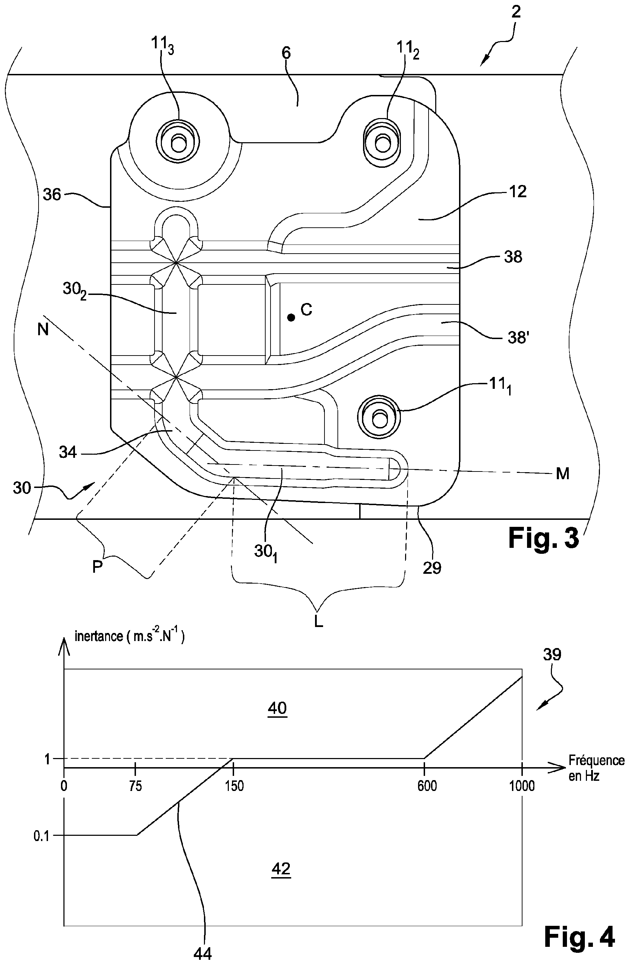

La figure 1 est une vue d'une structure 2 de véhicule automobile comprenant un plancher 3 formant un tunnel central longitudinal 4 et comprenant une portion de structure 6 étendue située sur la partie supérieure 8 du tunnel 4. Une flèche indique la direction vers l'avant du véhicule automobile de la structure 2. La portion de structure 6 comprend des vis de fixation 10₁, 10₂ et 10₃ soudées et s'étendant en saillie vers le haut par rapport à la face supérieure 8 du tunnel 4. Les vis de fixation soudées 10₁, 10₂ et 10₃ sont destinées à la fixation d'un dispositif de détection de choc et de déclenchement de coussin(s) gonflable(s) (non représenté). La structure 2 comprend une plaque nervurée 12 fixée sur la portion de structure 6 entre les vis 10₁, 10₂ et 10₃ de manière à diminuer l'inertance d'au moins une desdites vis. On peut voir sur l'image que la structure comprend deux traverses médianes 14 et 14' s'étendant entre le tunnel central 4 et chacun des longerons longitudinaux du plancher 3. Par traverses « médianes », on entend qu'elles sont situées à une distance des extrémités avant 16 et arrière 18 du plancher 3 de plus de 40% de la distance entre lesdites extrémités 16 et 18. La portion de structure 6 est située à distance « L » longitudinalement des traverses 14 et 14', préférentiellement à plus de 20cm, plus préférentiellement à plus de 30cm, plus préférentiellement encore à plus de 40cm de l'axe transversal « K » formé par les traverses 14 et 14'. La portion de structure 6 est en l'occurrence disposée à distance vers l'avant par rapport à l'axe « K » des traverses. La portion de structure 6 est également située en arrière d'une zone de fixation 20 d'un boîtier de commande de changement de vitesse, et en avant d'une autre zone de fixation 22 d'un boîtier de commande de frein à main. L'inertance de chacune des vis de fixation 10₁, 10₂ et 10₃ de la structure 2 est une caractéristique acoustique permettant de définir certains phénomènes vibratoires concernant ces vis. Elle indique la façon dont les vis réagissent en vibration à la sollicitation d'un effort. Formellement, c'est le rapport de l'accélération que prend la masse des vis sur la force excitatrice, et ce dans le domaine fréquentiel ; l'inertance s'exprime en m.s⁻².N⁻¹. Les critères d'inertance auxquels doivent satisfaire les vis de fixation 10₁, 10₂ et 10₃ de fixation du dispositif de détection de chocs sont abordés en relation avec la figure 4.

La figure 2 est une vue de côté de la portion 6 de la structure 2 conforme à l'invention. On peut voir la forme en tunnel 4 de la structure 2. Un dispositif 24 de détection de chocs du véhicule est fixé par les trois vis 10₁, 10₂ et 10₃ à ladite portion de structure 6. Le dispositif 24 peut également comprendre les éléments aptes à déclencher un ou plusieurs coussins gonflables. La plaque nervurée 12 est un embouti comprenant plusieurs nervures et fixé à la portion de structure 6 par soudage. La fixation de la plaque nervurée 12 sur la portion de structure 6 peut être réalisée par des points de soudure électrique par résistance. On peut voir que la plaque nervurée 12 comprend trois orifices au travers desquels passent les trois vis de fixation 10₁, 10₂ et 10₃ du dispositif 24. La première vis de fixation 10₁ visible au premier plan de l'image est à proximité du bord latéral 28 de la portion de surface 6. On peut observer que la portion de surface 6 ne comprend pas de vis de fixation en arrière (à gauche sur l'image) de cette première vis 10₁. On peut également observer que la première vis 10₁ est située latéralement à distance du centre « C » de la portion de structure 6. La plaque nervurée 12 comprend au moins une nervure 30 dont une portion avant s'étend entre la première vis 10₁ et le bord latéral droit 28 de la portion de surface 6 le plus proche latéralement de ladite vis 10₁. Les vis de fixation 10₁, 10₂ et 10₃ comprennent, chacune, un épaulement 32 à distance « D » verticalement de la portion de structure 6 et recevant le contour d'un orifice du dispositif de détection de choc 24 en vue de sa fixation à distance de ladite portion 6. La distance « D » est comprise entre 5mm et 30mm.

La figure 3 est une vue de dessus de la plaque nervurée 12 conforme à l'invention, fixée à la portion 6 de la structure 2, et apte à recevoir le dispositif de détection de choc et de déclenchement de coussin(s) gonflable(s) (non représenté). La plaque nervurée 12 est de forme généralement rectangulaire, elle comprend une nervure 30 décrivant une forme de L avec une portion coudée 34 située à un des coins de la plaque. Comme introduit en relation avec la figure 2, la plaque nervurée 12 comprend, en outre, trois orifices de fixation 11₁, 11₂ et 11₃, chacun étant situé à un autre des coins de la plaque nervurée 12. La nervure 30 s'étend sur une longueur de plus 50mm, préférentiellement plus de 100mm, plus préférentiellement encore plus de 150mm et est d'une section comprise entre 5mm et 25mm, préférentiellement entre 10mm et 20mm. Plus précisément, la nervure 30 comprend une première branche 30₁ s'étendant longitudinalement, dans la direction « M » sur l'image, et une deuxième branche 30₂ s'étendant perpendiculairement à ladite première branche 30₁ et joignant ladite branche 30₁ par la portion de forme coudée 34. La portion coudée 34 de la nervure 30 est située au niveau d'un bord arrière 36 de la plaque nervurée 12 ; la portion coudée 34 est orientée dans la direction « N » qui est inclinée d'un angle compris entre 10° et 70° par rapport à la première branche 30₁, préférentiellement d'un angle compris entre 40 et 50°. On peut observer que la différence entre la longueur « L » de la première branche 30₁ et la longueur « P » de la portion coudée 34 est inférieure à 50% de la longueur « L » de la première branche 30₁, préférentiellement inférieure à 20% de la longueur « L ». Les première 30₁ et deuxième 30₂ branches de la nervure 30 en forme de L s'étendent sur la plaque en longeant un bord latéral 29 et le bord arrière 36 de la plaque nervurée 12, respectivement. Plus précisément, la première branche 30₁ de la nervure 30 longe le bord latéral droit 29 de la plaque nervurée et s'étend vers un coin avant droit de la plaque, ledit coin comprenant l'orifice 11₁ disposé latéralement à cette première branche 30₁. On peut voir le centre « C » de la portion de structure 6 correspondant au centre de la plaque nervurée 12. L'orifice 11₁ est à distance latéralement du centre « C » et la première branche 30₁ de la nervure 30 en forme de L s'étend entre l'orifice 11₁ et le bord 29 de la plaque 12 situé latéralement le plus à proximité dudit orifice 11₁. La nervure 30 en forme de L est une nervure principale, la plaque comprenant, en outre, une ou plusieurs autres nervures secondaires 38 et 38'. On peut voir la première nervure secondaire 38 qui s'étend dans une direction parallèle à la première branche 30₁ de la nervure principale 30 en forme de L. La face de fixation de la plaque nervurée 12 sur la structure 2 du véhicule est la face formant les faces concaves de la nervure 30 en forme de L et des nervures secondaires 38 et 38'. La surface de la plaque nervurée 12 peut être comprise entre 60cm² et 100cm², préférentiellement entre 70cm² et 90cm².

La figure 4 est une vue d'un diagramme 39 d'inertance en m.s⁻².N⁻¹ en fonction de la fréquence en Hz de la vibration après sollicitation, diagramme sur lequel sont représentées deux régions 40 et 42 séparées par une courbe 44 correspondant à la limite maximale d'inertance à laquelle doivent satisfaire les vis de fixation du dipositif de détection de choc selon la fréquence des vibrations. L'inertance des vis doit être inférieure à un premier palier de 0,1m.s⁻².N⁻¹ pour une fréquence de vibration inférieure à 75Hz ; l'inertance doit également être inférieure à un deuxième palier de 1 m.s⁻².N⁻¹ pour une plage de fréquence de vibration comprise entre 150Hz et 600Hz.

## Revendications

1. Structure (2) de véhicule automobile comprenant une portion (6) généralement étendue avec plusieurs vis (10₁, 10₂, 10₃) soudées à ladite portion (6) et destinées à la fixation d'un dispositif (24) de détection de choc et de déclenchement de coussin(s) gonflable(s);
**caractérisée en ce qu'**elle comprend, en outre :
une plaque nervurée (12) fixée sur la portion de structure (6) entre les vis (10₁, 10₂, 10₃) de manière à diminuer l'inertance d'au moins une desdites vis.

2. Structure (2) de véhicule automobile selon la revendication 1, **caractérisée en ce que** la structure (2) comprend un plancher (3) formant un tunnel central (4) longitudinal, la portion généralement étendue (6) étant située sur la partie supérieure (8) dudit tunnel (4), les vis de fixation (10₁, 10₂, 10₃) s'étendant en saillie vers le haut.

3. Structure (2) de véhicule automobile selon l'une des revendications 1 et 2, **caractérisée en ce que** la plaque nervurée (12) est un embouti comprenant une (30) ou plusieurs nervures (30 ;38 ; 38'), ladite plaque (12) étant fixée à la portion de structure (6) par soudage.

4. Structure (2) de véhicule automobile selon l'une des revendications 1 à 3, **caractérisée en ce qu'**une (10₁) des vis (10₁, 10₂, 10₃) est disposée latéralement à distance du centre (C) de la portion de structure (6), la plaque nervurée (12) comprenant une nervure (30) s'étendant entre ladite vis (10₁) et un bord (28) de ladite portion (6) le plus proche latéralement de ladite vis (10₁).

5. Structure (2) de véhicule automobile selon la revendication 4, **caractérisée en ce que** la nervure (30) comprend une première branche (30₁) s'étendant longitudinalement et une deuxième branche (30₂) s'étendant perpendiculairement à ladite première branche (30₁) et joignant ladite branche (30₁) par une portion de forme coudée (34).

6. Structure (2) de véhicule automobile selon l'une des revendications 1 à 5, **caractérisée en ce que** la plaque nervurée (12) comprend un ou plusieurs orifices (11₁, 11₂, 11₃) traversé(s) par la ou les vis de fixation (10₁, 10₂, 10₃), respectivement.

7. Structure (2) de véhicule automobile selon l'une des revendications 4 et 5 et selon la revendication 6, **caractérisée en ce que** la nervure (30) s'étend entre l'orifice (11₁) recevant la vis (10₁) disposée latéralement à distance du centre (C) de la portion de structure (6) et le bord (29) de la plaque (12) le plus proche latéralement dudit orifice (11₁).

8. Structure (2) de véhicule automobile selon l'une des revendications 1 à 7, **caractérisée en ce qu'**elle comprend le dispositif de détection de choc (24), ledit dispositif étant fixé à la portion de structure (6) via trois (10₁, 10₂, 10₃) des vis de fixation.

9. Structure (2) de véhicule automobile selon l'une des revendications 1 à 8, **caractérisée en ce que** la ou les vis (10₁, 10₂, 10₃) comprennent, chacune, un épaulement (32) à distance de la portion de structure (6), apte à recevoir le contour d'un orifice du dispositif de détection de choc (24) en vue de sa fixation à distance de ladite portion (6).

10. Plaque nervurée (12) de forme généralement rectangulaire avec quatre coins, destinée à être montée à la structure (2) d'un véhicule automobile en vue de la fixation d'un dispositif (24) de détection de choc et de déclenchement de coussin(s) gonflable(s) ;
**caractérisée en ce qu'**elle comprend :
- au moins une nervure (30) décrivant une forme de L avec une portion coudée (34) située à un des coins de la plaque nervurée (12) ;
- trois orifices de fixation (11₁, 11₂, 11₃), chacun étant situé à un autre des coins de la plaque nervurée (12).

## Patentansprüche

1. Kraftfahrzeugstruktur (2), die einen Abschnitt (6) umfasst, der sich allgemein mit mehreren Schrauben (10₁, 10₂, 10₃) erstreckt, die an den Abschnitt (6) geschweißt und zum Befestigen einer Aufpralldetektionsvorrichtung (24) und zum Auslösen des (der) aufblasbaren Kissen(s) bestimmt sind;
**dadurch gekennzeichnet, dass** sie außerdem Folgendes umfasst:
eine gerippte Platte (12), die auf dem Strukturabschnitt (6) zwischen den Schrauben (10₁, 10₂, 10₃) derart befestigt ist, dass die Inertanz mindestens einer der Schrauben verringert wird.

2. Kraftfahrzeugstruktur (2) nach Anspruch 1, **dadurch gekennzeichnet, dass** die Struktur (2) einen Boden (3) umfasst, der einen zentralen Längstunnel (4) bildet, wobei der sich allgemein erstreckende Abschnitt (6) auf dem oberen Teil (8) des Tunnels (4) liegt, wobei sich die Befestigungsschrauben (10₁, 10₂, 10₃) nach oben vorragend erstrecken.

3. Kraftfahrzeugstruktur (2) nach einem der Ansprüche 1 und 2, **dadurch gekennzeichnet, dass** die gerippte Platte (12) ein Stanzteil ist, das eine (30) oder mehrere Rippen (30; 38; 38') umfasst, wobei die Platte (12) an dem Strukturabschnitt (6) durch Schweißen befestigt ist.

4. Kraftfahrzeugstruktur (2) nach einem der Ansprüche 1 bis 3, **dadurch gekennzeichnet, dass** eine (10₁) der Schrauben (10₁, 10₂, 10₃) seitlich von der Mitte (C) des Strukturabschnitts (6) beabstandet angeordnet ist, wobei die gerippte Platte (12) eine Rippe (30) umfasst, die sich zwischen der Schraube (10₁) und einem Rand (28) des Abschnitts (6), der der Schraube (10₁) seitlich am nächsten liegt, erstreckt.

5. Kraftfahrzeugstruktur (2) nach Anspruch 4, **dadurch gekennzeichnet, dass** die Rippe (30) einen ersten Schenkel (30₁) umfasst, der sich längs erstreckt, und einen zweiten Schenkel (30₂), der sich senkrecht zu dem ersten Schenkel (30₁) erstreckt und an den Schenkel (30₁) durch einen Abschnitt mit Winkelform (34) anschließt.

6. Kraftfahrzeugstruktur (2) nach einem der Ansprüche 1 bis 5, **dadurch gekennzeichnet, dass** die gerippte Platte (12) eine oder mehrere Öffnungen (11₁, 11₂, 11₃) umfasst, die jeweils von der oder den Befestigungsschrauben (10₁, 10₂, 10₃) durchquert ist (sind).

7. Kraftfahrzeugstruktur (2) nach einem der Ansprüche 4 und 5 und nach Anspruch 6, **dadurch gekennzeichnet, dass** sich die Rippe (30) zwischen der Öffnung (11₁), die die Schraube (10₁) aufnimmt, die seitlich von der Mitte (C) des Strukturabschnitts (6) angeordnet ist, und dem Rand (29) der Platte (12), der der Öffnung (111) seitlich am nächsten liegt, erstreckt.

8. Kraftfahrzeugstruktur (2) nach einem der Ansprüche 1 bis 7, **dadurch gekennzeichnet, dass** sie die Aufpralldetektionsvorrichtung (24) umfasst, wobei die Vorrichtung an dem Strukturabschnitt (6) über drei (10₁, 10₂, 10₃) der Befestigungsschrauben befestigt ist.

9. Kraftfahrzeugstruktur (2) nach einem der Ansprüche 1 bis 8, **dadurch gekennzeichnet, dass** die Schraube oder Schrauben (10₁, 10₂, 10₃) jeweils eine Schulter (32) umfassen, die von dem Strukturabschnitt (6) beabstandet ist, die geeignet ist, die Kontur einer Öffnung der Aufpralldetektionsvorrichtung (24) zu deren Befestigung von dem Abschnitt (6) beabstandet aufzunehmen.

10. Gerippte Platte (12) mit allgemein rechteckiger Form mit vier Ecken, die dazu bestimmt ist, auf die Struktur (2) eines Kraftfahrzeugs zur Befestigung einer Aufpralldetektionsvorrichtung (24) und zum Auslösen des (der) aufblasbaren Kissen(s) montiert zu werden;
**dadurch gekennzeichnet, dass** sie Folgendes umfasst:
- mindestens eine Rippe (30), die eine L-Form mit einem abgewinkelten Abschnitt (34), der an einer der Ecken der gerippten Platte (12) liegt, beschreibt;
- drei Befestigungsöffnungen (11₁, 11₂, 11₃), die jeweils an einer der anderen Ecken der gerippten Platte (12) liegen.

## Claims

1. A motor vehicle structure (2) including a generally extended portion (6) with a plurality of screws (10₁, 10₂, 10₃) welded to said portion (6) and intended for the fixing of a device (24) for impact detection and triggering of (an) airbag(s);
**characterized in that** it includes, in addition:
a ribbed plate (12) fixed to the structure portion (6) between the screws (10₁, 10₂, 10₃) so as to reduce the inertance of at least one of the said screws.

2. The motor vehicle structure (2) according to claim 1, **characterized in that** the structure (2) includes a floor (3) forming a central longitudinal tunnel (4), the generally extended portion (6) being situated on the upper part (8) of said tunnel (4), the fixing screws (10₁, 10₂, 10₃) extending in a projecting manner upwards.

3. The motor vehicle structure (2) according to one of claims 1 and 2, **characterized in that** the ribbed plate (12) is a stamped part including one (30) or several ribs (30; 38; 38'), said plate (12) being fixed to the structure portion (6) by welding.

4. The motor vehicle structure (2) according to one of claims 1 to 3, **characterized in that** one (10₁) of the screws (10₁, 10₂, 10₃) is disposed laterally at a distance from the centre (C) of the structure portion (6), the ribbed plate (12) including a rib (30) extending between said screw (10₁) and an edge (28) of said portion (6) closest laterally to said screw (10₁).

5. The motor vehicle structure (2) according to claim 4, **characterized in that** the rib (30) includes a first branch (30₁) extending longitudinally and a second branch (30₂) extending perpendicularly to said first branch (30₁) and joining said branch (30₁) by a portion of bent shape (34).

6. The motor vehicle structure (2) according to one of claims 1 to 5, **characterized in that** the ribbed plate (12) includes one or more orifices (11₁, 11₂, 11₃) passed through by the fixing screw(s) (10₁, 10₂, 10₃) respectively.

7. The motor vehicle structure (2) according to one of claims 4 and 5 and according to claim 6, **characterized in that** the rib (30) extends between the orifice (11₁) receiving the screw (10₁) disposed laterally at a distance from the centre (C) of the structure portion (6) and the edge (29) of the plate (12) closest laterally to the said orifice (11₁).

8. The motor vehicle structure (2) according to one of claims 1 to 7, **characterized in that** it includes the impact detection device (24), said device being fixed to the structure portion (6) via three (10₁, 10₂, 10₃) of the fixing screws.

9. The motor vehicle structure (2) according to one of claims 1 to 8, **characterized in that** the screw(s) (10₁, 10₂, 10₃) each include a shoulder (32) at a distance from the structure portion (6), able to receive the contour of an orifice of the impact detection device (24) for the purpose of its fixing at a distance from said portion (6).

10. A ribbed plate (12) of generally rectangular shape with four corners, intended to be mounted on the structure (2) of a motor vehicle for the purpose of the fixing of a device (24) for impact detection and triggering of (an) airbag(s);
**characterized in that** it includes:
- at least one rib (30) describing an L shape with a bent portion (34) situated at one of the corners of the ribbed plate (12);
- three fixing orifices (11₁, 11₂, 11₃), each being situated at another of the corners of the ribbed plate (12).
